# EUROPEAN PATENT SPECIFICATION

(11) **EP 2 740 617 B1**
(45) Date of publication and mention of the grant of the patent: **13.02.2019**
(21) Application number: 13196012.2
(22) Date of filing: 06.12.2013
(51) Int. Cl.: B60D 1/06, B60D 1/60

(54) **Trailer coupling lock and fastening means**
Anhängerkupplungsverriegelung und Befestigungsmittel
verrouillage d'un attelage et moyens de fixation

(30) Priority: 07.12.2012 SE 1251394
(43) Date of publication of application: 11.06.2014
(73) Proprietor: ProLox AB, 186 24 Vallentuna (SE)
(72) Inventor: Rosenlund, Mikael, 186 32 Vallentuna (SE)
(74) Representative: Ebbinghaus, Johan Olof

(56) References cited:
- DE-A1- 10 249 940
- DE-U1- 8 633 616
- GB-A- 2 218 678
- US-A- 3 391 555

## Description

### Field of the invention

The invention relates to a trailer coupling lock for blocking operation of a release handle of a trailer coupling.

### Prior art

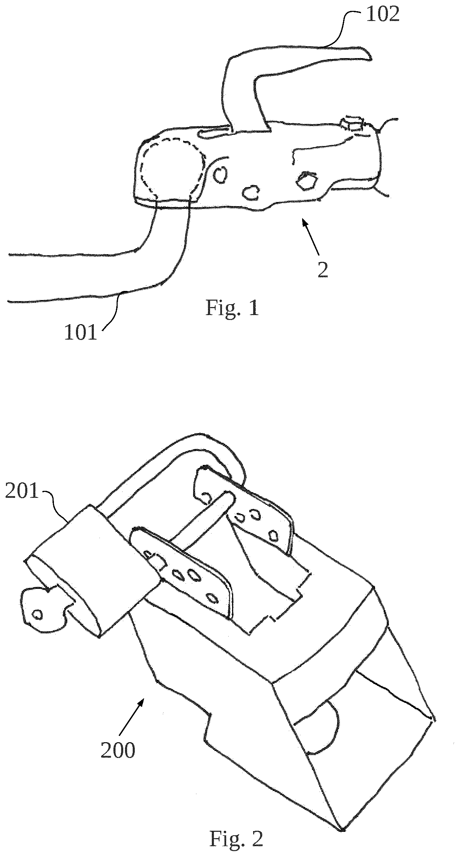

A trailer coupling 2 is a device that is designed to connect a trailer to a traction vehicle, see Figure 1. The trailer coupling is usually firmly joined to the trailer and has a recess in which a towing hook 101 of the traction vehicle fits whereby the traction vehicle may pull the trailer when they are connected. Figure 1 discloses a trailer coupling 2 with the portion where the tow ball of the towing hook 101 engages the trailer coupling in a cross section.

At the recess of the trailer coupling there is a locking means that lockingly engages with a towing ball of the towing hook when connected together, whereby the trailer coupling is prevented from coming loose during a ride when it is connected.

The trailer coupling also has a release handle 102 that when operated releases the locking device at the recess in the trailer coupling such that it lets the tow ball go, whereby the trailer coupling can be removed from the towing hook.

To prevent any unauthorised person from stealing a trailer from a vehicle by disconnecting the trailer, connect it to another vehicle and drive away with it, a number of different trailer coupling locks have been proposed. Their general functioning are by, in different ways, preventing operation of the release handle of a trailer coupling.

A common version of a trailer coupling lock 200 is shown in figure 2 and can be said to resemble a sleeve that is slipped over the trailer coupling when it is in a mounted state on a car. It can also be used in a non-mounted state for the trailer coupling, for instance when the trailer is parked without being connected to a traction vehicle.

The described trailer coupling lock 200 according to figure 2 is mounted by being slipped over a large part of the trailer coupling in a direction from the towing hook and backwards over the trailer coupling. In this mounted state, a front edge of the trailer coupling lock blocks the release handle of the trailer coupling. A padlock 201, introduced in holes of two stand-up flanges, prevents, together with a lower surface of the trailer coupling lock, the trailer coupling lock from being able to be removed from the trailer coupling.

There are also other models of trailer coupling locks, for instance such where a tailor-made housing in synthetic material is slipped over and completely encloses the release handle and parts of the trailer coupling and thereby precludes the release handle from being operated. Such locks with a housing for the release handle can have a lock cylinder that penetrates through the material of the trailer coupling and by that locks the trailer coupling lock to it.

A disadvantage with such known trailer coupling locks is that they do not fit all trailer couplings. The first variant of trailer coupling locks mentioned can be adapted to work with trailer coupling locks of different sizes, but there are limitations. Such a trailer coupling lock of a relatively large size functions badly with smaller trailer couplings since openings between the trailer coupling and the lock make the lock fit badly and can be used as points of attack for a break attempt.

The second type of trailer coupling lock, that is tailor-made, can in general only be used with a specific, therefore adapted, trailer coupling.

US 3 391 555 discloses a locking device for a trailer hitch with a lock bolt having a coaxial keyed cavity to receive a wrench means to manually rotate the lock bolt when locking the locking device to a trailer. To prevent the lock bolt from being unscrewed, a cylinder lock fits in the keyed cavity and can be locked there, such that the wrench means can not be inserted.

### Summary of Invention

### Technical problem

It is an object of the present invention to propose a solution or a reduction of the problems with the prior art. A main object therefore, is to propose an improved trailer coupling lock that to a higher extent can be used with trailer couplings of different sizes.

### Solution to the technical problem

According to the invention this is accomplished with a trailer coupling lock according to claim 1.

This trailer coupling lock solves the above problem by that it comprises an adjustable fastening means with which the trailer coupling lock can be permanently fixed at trailer couplings of different sizes.

The fastening means comprises two support means and when fastening the trailer coupling lock on a trailer coupling, at least one of the support means is adjusted in relation to the other such that they together clamp the trailer coupling between each other in a fixed position.

The adjustability of said at least one adjustable support means arise by this support means comprising a portion with a thread and a sleeve that can be screwed off and on the thread of the portion, such that its distance to the trailer coupling can be adjusted.

When at least one support means has been adjusted such that both support means clamps a trailer coupling between each other, they are fixed to the trailer coupling by a fixing screw that is mounted through one of the support means, then through the trailer coupling and finally through the other support means.

The head of the fixing screw is countersunk in a recess in one of the support means and the head is sealed such that no tool is able to reach and rotate the screw. The length of the fixing screw is adapted such that its other end does not protrude outside the second support means and can therefore not be manipulated with a tool.

The sleeve of the at least one adjustable support means also comprises a second thread, the pitch of which differs from the pitch of the first thread. The second thread engages with the fixing screw in the fixed position.

Owing to the threads of the sleeve having different pitch, it is prevented from a further adjustment when the fixing screw is screwed in through it, since a rotation attempt of the sleeve causes the sleeve to want to move with one speed along the portion with which its first thread engages but with another speed along the fixing screw with which its second thread engages. This has the effect that the sleeve is fixed in one and the same position.

Thus, the trailer coupling lock can be adapted to trailer couplings of different sizes by rotating the sleeve of the first support means and thereby is adjusted to clamp a desired trailer coupling between itself and the opposite support means. The sleeve is locked by having the fixing screw thereafter mounted through the support means, through the trailer coupling and be screwed into the second thread of the sleeve.

When the head of the fixing screw has been sealed, it can no longer be unscrewed; the other end of it is out of reach for a tool and the screw can therefore not be unscrewed from this direction either. Finally, the sleeve of the adjustable support means is fixed by the pitch of the two different threads. Therefore, the trailer coupling lock is permanently fixed at the trailer coupling.

Further advantageous embodiments of the invention are stated in the dependent claims.

### Brief Description of Drawings

Embodiments that exemplify the invention will now be described with reference to the attached drawings on which
Fig. 1 discloses a towing hook with a trailer coupling mounted,
Fig. 2 discloses a prior art trailer coupling lock,
Fig. 3 discloses a trailer coupling lock according to the invention without a locking bar,
Fig. 4 discloses a trailer coupling lock according to the invention with its constituents in a partly disassembled condition,
Fig. 5 discloses a trailer coupling lock according to the invention with a locking bar partly mounted,
Fig. 6 discloses a trailer coupling lock according to the invention mounted on a trailer coupling and without a locking bar, and
Fig. 7 discloses a trailer coupling lock according to the invention mounted on a trailer coupling and with a locking bar.

### Detailed Description of the invention

The most common principle for trailer coupling locks is that they in some way block a release handle of a trailer coupling such that the trailer coupling can not be opened. Also the trailer coupling lock according to the present invention uses this principle.

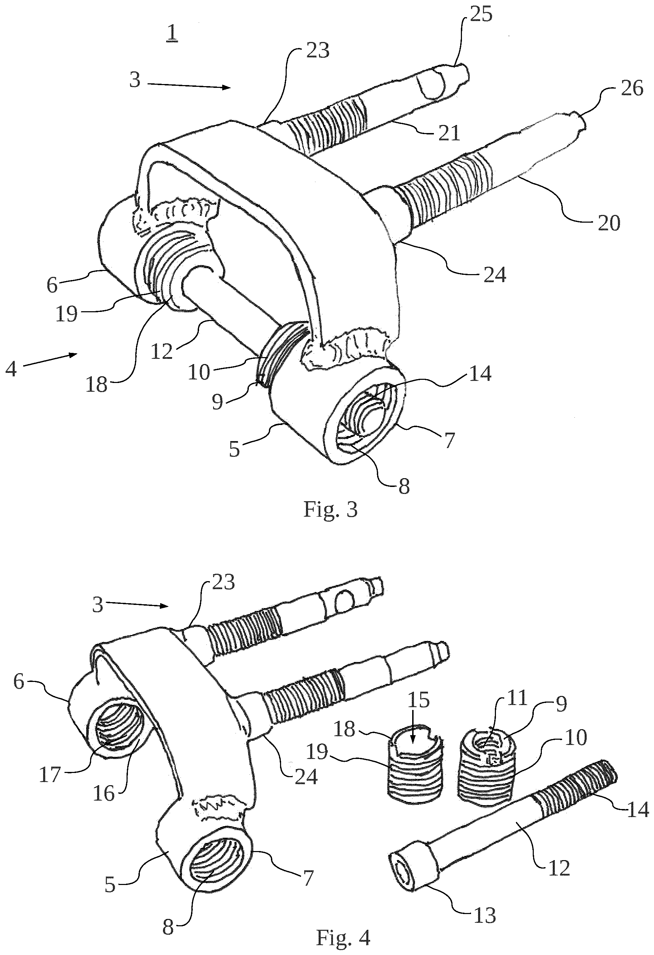

Figure 3 discloses a trailer coupling lock 1 for blocking operation of a release handle of a trailer coupling.

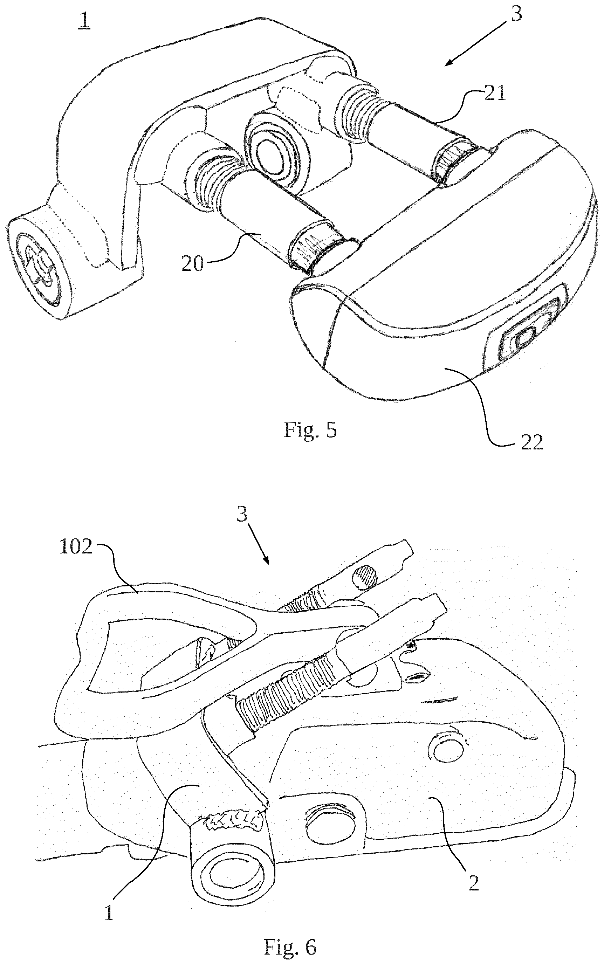

The trailer coupling lock comprises an adjustable fastening means 4 for fastening the trailer coupling lock 1 on trailer couplings of different sizes. The trailer coupling lock further comprises a blocking portion 3 to which a blocking device 22 (shown in Figure 5) can be connected and be locked, in a way that it can be unlocked, in order to together block operation of the release handle in a locked position.

The fastening means 4 comprises a first 5 and a second 6 support means located opposite at a distance from each other and mutually fixed.

At least the first support means 5 comprises a portion 7 with a thread 8 and further a sleeve 9 with a first thread 10 which can be screwed off and on the thread 8 of the portion 7 such that the sleeve 9 can be adjusted to clamp a trailer coupling 2 (not shown in Fig. 3) between the sleeve 9 and the second support means 6 in a fixed position.

The sleeve 9 is shown unscrewed from the portion 7 in figure 4. Inside the sleeve 9 is a second thread 11 located, the pitch of said second thread 11 is different from the pitch of the first thread 10 of the sleeve 9.

Returning to figure 3, the fastening means 4 further comprises a fixing screw 12 with a screw head 13 (shown in figure 4) and a thread 14, which thread 14 fits with the second thread 11 of the sleeve 9.

The second support means 6 has a recess 15 (not visible in Fig. 3) in which the head 13 of the fixing screw 12 completely can be countersunk such that the head 13 is closely enclosed by the second support means 6. This is not apparent from figure 3 since the second support means 6 is directed in the other direction in the figure; the head 13 of the fixing screw 12 is on the rear end of the second support means 6 in the figure.

In the fixed position, the fixing screw 12 is introduced through the second support means 6, through a trailer coupling 2 (not shown in figure 3) fixed between the sleeve 9 and the second support means 6, and further is screwed with its thread 14 into the second thread 11 (shown in figure 4) inside the sleeve 9, and lies with its head 13 in the recess 15 of the second support means 6 (not shown in figure 3) and against the second support means 6 such that an axial displacement of the fixing screw 12 in a direction towards the sleeve 9 is prevented, and wherein the head 13 of the fixing screw 12 in the fixed position is sealed to prevent an unscrewing of the fixing screw 12 with a screwing tool.

By this construction of the trailer coupling lock, a rotation attempt, in the fixed position, on the sleeve 9, in a direction that wants to carry the sleeve 9 away from the fixed trailer coupling, causes a locking of the sleeve 9 by means of the two different threads 10, 11 of the sleeve 9 with different pitches. Thus, the sleeve 9 is prevented from being unscrewed from the trailer coupling 2 in the fixed position.

In this way, the trailer coupling lock can be permanently fastened on trailer couplings of different sizes.

As a variant, of the described trailer coupling lock 1 and with reference to figure 4, also the second support means 6 can comprise a portion 16 with a thread 17 and further a sleeve 18 with thread 19 which can be screwed off and on the portion 16 of the second support means. In this way, the sleeve 18 can be adjusted to clamp a trailer coupling 2 between the sleeve 18 and the sleeve 9 of the first support means and wherein the recess 15 of the second support means 6 is located in the sleeve 18 of the second support means.

The screw head 13 in the fixed position of the described variants of the trailer coupling lock can be sealed with for instance one into a recess of the screw head driven stop ball. Such a ball can be made of steel and when it is driven into the recess for a rotation tool of the screw head, such as a recess for a screwdriver or a hexagon wrench, it will be impossible to remove if its proportions in view of the recess are the right ones. An example thereof is a spherical ball that dimensionwise just about can be driven into a hexagonal recess in the screw head. In this way, the ball constitutes a seal or sealing of the screw head and prevents the screw from being unscrewed again. Examples of other ways of sealing the recess in the screw head are to completely or partly fill or cover it with a small weld, in everyday language a welding dot. Also, a mechanical modifying of the screw head is of course possible, for instance cutting off of the part that comprises the recess with an angle grinder or other powerful cutting tool. Many other variants are possible, for instance weakened screw heads which breaks at a load with a certain torque.

Thus far, the fastening of the trailer coupling lock on a trailer coupling. For the actual blocking of the release handle of a trailer coupling, the trailer coupling lock has, as previously mentioned, a blocking portion to which a blocking device can be connected and locked. When these are connected in the right position they prevent the operation of a release handle. The locking of the blocking device to the blocking portion prevents any unauthorised person from disconnecting the blocking device and operating the release handle.

The connection of the blocking device to the blocking portion can happen in several ways. For all described variants of the trailer coupling lock, the blocking portion 3 itself can for instance, as is shown in figure 3, be arranged to receive a blocking device 22 (an example shown in figure 5) with one in the blocking device 22 integrated locking mechanism with which the locking of the blocking device 22 to the blocking portion 3 can happen.

In the example of this embodiment that is shown in figure 3, the blocking portion 3 comprises two protruding bars 20, 21. The bars has a free end 25, 26 which are adapted to receive a blocking device by way of a recess that is suggested in the free end 25 of bar 21. A corresponding recess may be present in bar 26 but is facing away from the eye of the observer in figure 3.

For this blocking portion, that is adapted to receive a blocking device having an integrated locking mechanism, can for instance a locking block 22 be used as a blocking device 22. This is shown in figure 5. With a locking block is meant a block with an integrated lock of the same type that is used for a U-lock for bicycles and motorcycles. Such a solution is rational since it can use already existing such locking blocks and avoid the cost of developing a separate blocking device with an integrated locking mechanism.

Of course, there is nothing that prevents the locking mechanism for the locking of the connection between the blocking portion and the blocking device, as an alternative to the embodiment above, from being located in the blocking portion. This is not shown in any drawing.

Embodiments of the blocking portion 3 of the trailer coupling lock that have been described above function with both a separate blocking device that is not part of the trailer coupling lock and with a blocking device that is integrated in the trailer coupling lock.

The embodiments that are shown as examples in figures 3-7 are all of the type where the blocking device 22 is not integrated but is separate from the trailer coupling lock. However, the blocking device must of course in use be mounted on the trailer coupling lock for it to be effective in blocking a release handle of a trailer coupling. It is, however, possible to adapt the blocking portion of the trailer coupling lock such that it can be supplemented with a blocking device in the form of, on the market available, suitable devices. Examples of such suitable devices that can be used are locking bars or locking blocks from U-locks, padlocks or other means that can be connected to a suitably formed blocking portion. In this way, a user can procure a trailer coupling lock according to the invention and in use supplement it with such a device available separately on the market.

As mentioned above, all described embodiments of the blocking portion of the trailer coupling lock function with both a separate blocking device and with a blocking device that is integrated in the trailer coupling lock. As an example of such an integrated blocking device, a blocking device can be mentioned that in one end is articulatedly joined with an end of the blocking portion and in another end of the blocking device is connectible with another end of the blocking portion and is lockable with this.

In this way the blocking device can articulatedly be removed from a release handle of a trailer coupling to enable operation of the release handle. When such a release handle is to be blocked, the blocking device may be articulatedly brought towards the release handle and be connected with the blocking portion, according to the previous paragraph, whereupon they together block the release handle from being operated.

The above described variants of the blocking portion and thereto adapted blocking device are described in principle and may take different physical manifestations. They have been described with reference to, i.a., figure 3. In fact, figure 3 is only one possible physical implementation of all different physical implementations that are possible according to the principles described above.

A further advantageous principle that is apparent from figure 3 will now be described. It can be combined with all principles and embodiments of the trailer coupling lock described above.

In figure 3, a trailer coupling lock 1 where the blocking portion 3 comprises two points of attachment 23, 24 is shown. Further, the blocking portion 3 comprises two bars 20, 21, each attached with one end in a corresponding one of the points of attachments 23, 24 and are adjustably protruding from these and are each terminated in a second end 25, 26 with which the blocking device 22 is connectible to be able to be locked to the bars 20, 21. In this way it is enabled that the blocking portion 3 can be adjusted to be adapted to different release handles. This brings the further advantage that the trailer coupling lock receives a further dimension of adaptability to different trailer couplings. With that, the trailer coupling can be adjusted to trailer couplings with different placements of release handles, for instance further away from a point of attachment for the trailer coupling lock on the trailer coupling or closer to such a point of attachment.

The adjustability of the bars 20, 21 of the trailer coupling lock 1 in the preceding paragraph can be achieved by the bars 20, 21 being joined by threads with the points of attachment 23, 24. That brings a simple adjustability, the fine adjustment of which can be controlled by the choice of the pitch of the threads in the threaded connection between the bars 20, 21 and the points of attachment 23, 24.

Another variant for the adjustability of the bars 20, 21 is that these comprises means along their length that are connectable with the points of attachment by way of a bayonet coupling principle. For instance with protruding protrusions along the lengths of the bars that with a turning hooks into recesses in the points of attachments.

The above described variants of the adjustable blocking portion can be combined with all earlier described variants of the trailer coupling lock.

It is also possible to make the adjustable blocking portion independent of the adjustable fastening means. Thus, a trailer coupling lock as described above is possible in all its different variants where the adjustable fastening means has been replaced by a fastening means of another construction than the adjustable fastening means above.

An example of such a fastening means of another construction can be a fastening means adapted for fixed fastening to a trailer coupling without adjustability. For instance a screw or bolt that is slipped through the trailer coupling lock and the trailer coupling to connect them with each other. The screw/bolt can be fixed by a suitable sealing, for instance by welding between this and a part of the trailer coupling or trailer coupling lock.

It is also possible that such a fastening means of another construction than has been described above in this application can be of an adjustable type, but which uses another principle than the adjustable fastening means in this application.

Figure 6 discloses an example with a trailer coupling lock 1 according to the invention mounted on a trailer coupling 2. In the figure, the trailer coupling lock 1 is firmly fixed on the trailer coupling 2 and the blocking portion 3 is ready to receive a blocking device in order to together block the operation of the release handle 102. Thus, in this position, the trailer coupling 2 is not blocked by the trailer coupling lock and the trailer coupling 2 can therefore be mounted on or dismounted from a towing hook in this state.

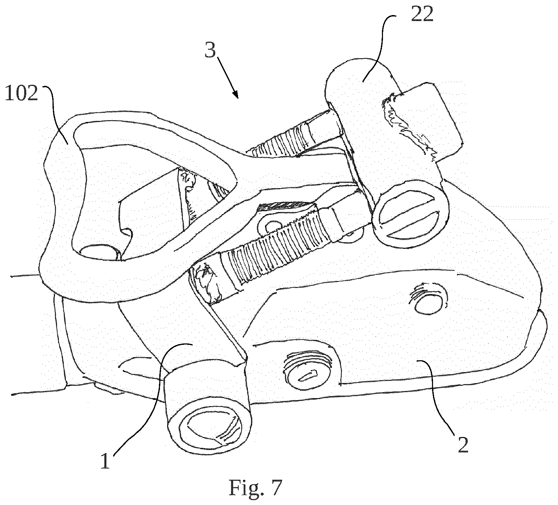

Figure 7 discloses an example with a trailer coupling lock 1 according to the invention mounted on a trailer coupling 2. In the figure, the trailer coupling lock 1 is firmly fixed on the trailer coupling 2 and on the blocking portion 3, a blocking device 22 is mounted in order to together block the operation of the release handle 102. Thus, in this position, the trailer coupling 2 is blocked by the trailer coupling lock 1 and the trailer coupling 2 is therefore prevented from being mounted on or dismounted from a towing hook in this state.

The trailer coupling lock according to the invention can be made in many different materials, for instance steel, aluminium, other metals or synthetic materials. On a pure functional basis, all such materials mentioned work, but considering resistance to break attempts on the trailer coupling lock, the trailer coupling should for that reason be made of a strong, high-strength material, such as such materials that are traditionally used for for instance U-locks or padlocks.

### Reference Signs List

1. Trailer coupling lock
2. Trailer coupling
3. Blocking portion
4. Fastening means
5. First support means
6. Second support means
7. Portion of first support means
8. Thread of portion of first support means
9. Sleeve of first support means
10. First thread of sleeve of first support means
11. Second thread of sleeve of first support means
12. Fixing screw
13. Screw head
14. Thread of fixing screw
15. Recess of second support means
16. Portion of second support means
17. Thread of portion of second support means
18. Sleeve of second support means
19. Thread of sleeve of second support means
20. Bar
21. Bar
22. Blocking device
23. Point of attachment
24. Point of attachment
25. End of bar
26. End of bar
101. Towing hook
102. Release handle

## Claims

1. Trailer coupling lock (1) for blocking operation of a release handle of a trailer coupling (2),
- wherein the trailer coupling lock comprises an adjustable fastening means (4) for fastening the trailer coupling lock (1) on trailer couplings of different sizes, and wherein the trailer coupling lock further comprises a blocking portion (3) to which a blocking device (22) can be connected and be locked, in a way that it can be unlocked, in order to together block operation of the release handle in a locked position,
- wherein the fastening means (4) comprises a first (5) and a second (6) support means located opposite at a distance from each other and mutually fixed,
- wherein at least the first support means (5) comprises a portion (7) with a thread (8) and further a sleeve (9) with a first thread (10) which can be screwed off and on the thread (8) of the portion (7) such that the sleeve (9) can be adjusted to clamp a trailer coupling (2) between the sleeve (9) and the second support means (6) in a fixed position,
- wherein inside the sleeve (9) is a second thread (11) located, the pitch of said second thread (11) is different from the pitch of the first thread (10) of the sleeve (9),
- wherein the fastening means (4) further comprises a fixing screw (12) with a screw head (13) and a thread (14), which thread (14) fits with the second thread (11) of the sleeve (9),
- wherein the second support means (6) has a recess (15) in which the head (13) of the fixing screw (12) can be completely countersunk such that the head (13) is closely enclosed by the second support means (6),
- wherein the fixing screw (12), in the fixed position, is introduced through the second support means (6), through a trailer coupling (2) fixed between the sleeve (9) and the second support means (6), and further is screwed with its thread (14) into the second thread (11) inside the sleeve (9), and lies with its head (13) in the recess (15) of the second support means (6) and against the second support means (6) such that an axial displacement of the fixing screw (12) in a direction towards the sleeve (9) is prevented, and wherein the head (13) of the fixing screw (12) in the fixed position is sealed to prevent an unscrewing of the fixing screw (12) with a screwing tool,
whereby, in the fixed position, a rotation attempt on the sleeve (9), in a direction that wants to carry the sleeve (9) away from the fixed trailer coupling (2), causes a locking of the sleeve (9) by means of the two different threads (10, 11) of the sleeve (9) with different pitches such that the sleeve (9) is prevented from being unscrewed from the trailer coupling (2) in the fixed position.

2. Trailer coupling lock (1) according to claim 1, wherein also the second support means (6) comprises a portion (16) with a thread (17) and further a sleeve (18) with thread (19) which can be screwed off and on the portion (16) of the second support means such that the sleeve (18) can be adjusted to clamp a trailer coupling (2) between the sleeve (18) and the sleeve (9) of the first support means and wherein the recess (15) of the second support means (6) is located in the sleeve (18) of the second support means.

3. Trailer coupling lock (1) according to any of claims 1 - 2, wherein the screw head (13) in the fixed position is sealed with any of: one into a recess of the screw head driven stop ball or a welding dot.

4. Trailer coupling lock (1) according to any of claims 1 - 3, wherein the blocking portion (3) is adapted to receive a blocking device (22) with one in this device integrated locking mechanism with which the locking of the blocking device (22) to the blocking portion (3) can happen.

5. Trailer coupling lock (1) according to the preceding claim, wherein the blocking portion (3) is adapted to receive a locking block (22) as a blocking device (22).

6. Trailer coupling lock (1) according to any of claims 1 - 3, wherein the blocking portion (3) comprises a locking mechanism adapted for the locking of the blocking device (22) to the blocking portion (3).

7. Trailer coupling lock (1) according to any of claims 1 - 6, wherein the blocking device (22) is a part of the trailer coupling lock (1).

8. Trailer coupling lock (1) according to any of claims 1 - 7, wherein the blocking portion (3) comprises two points of attachment (23, 24) and further comprises two bars (20, 21) each attached with one end in a corresponding one of the points of attachments (23, 24) and are adjustably protruding from these and are each terminated in a second end (25, 26) with which the blocking device (22) is connectible to be able to be locked to the bars (20, 21), whereby the blocking portion (3) can be adjusted to be adapted to different release handles.

9. Trailer coupling lock (1) according to claim 8, wherein the bars (20, 21) are joined by threads with the points of attachment (23, 24) whereby the adjustability of the bars in the protruding direction arise.

## Patentansprüche

1. Anhängerkupplungsverriegelung (1) zum Blockieren des Betätigens eines Lösegriffs einer Anhängerkupplung (2),
- wobei die Anhängerkupplungsverriegelung ein verstellbares Befestigungsmittel (4) zur Befestigung der Anhängerkupplungsverriegelung (1) an Anhängerkupplungen verschiedener Größen umfasst, und wobei die Anhängerkupplungsverriegelung weiterhin einen Blockierabschnitt (3) umfasst, mit dem eine Blockiervorrichtung (22) verbunden und derart entriegelbar verriegelt werden kann, dass sie zusammenwirkend den Betrieb des Lösegriffs in einer verriegelten Position blockieren,
- wobei das Befestigungsmittel (4) ein erstes (5) und ein zweites (6) Trägermittel umfasst, die gegenüber liegend in einem festen Abstand voneinander angeordnet sind,
- wobei wenigstens das erste Trägermittel (5) einen Abschnitt (7) mit einem Gewinde (8) und weiterhin eine Hülse (9) mit einem ersten Gewinde (10), die auf das Gewinde (8) des Abschnitts (7) aufgeschraubt und von diesem heruntergeschraubt werden kann, umfasst, so dass die Hülse (9) verstellt werden kann, um eine Anhängerkupplung (2) zwischen der Hülse (9) und dem zweiten Trägermittel (6) in einer fixierten Position einzuklemmen,
- wobei im Inneren der Hülse (9) ein zweites Gewinde (11) angeordnet ist, wobei die Steigung des zweiten Gewindes (11) sich von dem Abstand des ersten Gewindes (10) der Hülse (9) unterscheidet,
- wobei das Befestigungsmittel (4) weiterhin eine Fixierschraube (12) mit einem Schraubenkopf (13) und einem Gewinde (14) umfasst, wobei das Gewinde (14) in das zweite Gewinde (11) der Hülse (9) passt,
- wobei das zweite Trägermittel (6) eine Aussparung (15) aufweist, in die der Kopf (13) der Fixierschraube (12) vollständig versenkt werden kann, so dass der Kopf (13) von dem zweiten Trägermittel (6) dicht umgeben ist,
- wobei die Fixierschraube (12) in der fixierten Position durch das zweite Trägermittel (6) durch eine Anhängerkupplung (2), die zwischen der Hülse (9) und dem zweiten Trägermittel (6) befestigt ist, eingeführt wird, und weiterhin mit ihrem Gewinde (14) in das zweite Gewinde (11) im Inneren der Hülse (9) eingeschraubt ist und mit ihrem Kopf (13) in der Aussparung (15) des zweiten Trägermittels (6) liegt und gegen das zweite Trägermittel (6) derart anliegt, dass eine axiale Verschiebung der Fixierschraube (12) in Richtung auf die Hülse (9) verhindert wird, und wobei der Kopf (13) der Fixierschraube (12) in der fixierten Position verschlossen ist, um ein Lösen der Fixierschraube (12) mit einem Schraubwerkzeug zu verhindern,
wodurch in der fixierten Position ein Drehversuch an der Hülse (9) in einer die Hülse (9) von der fixierten Anhängerkupplung (2) entfernenden Richtung, ein Verriegeln der Hülse (9) mittels der zwei unterschiedlichen Gewinde (10, 11) der Hülse (9), die unterschiedliche Steigungen aufweisen, bewirkt, so dass verhindert wird, dass die Hülse (9) in der fixierten Position von der Anhängerkupplung (2) heruntergeschraubt werden kann.

2. Anhängerkupplungsverriegelung (1) nach Anspruch 1, wobei auch das zweite Trägermittel (6) einen Abschnitt (16) mit einem Gewinde (17) und weiterhin eine Hülse (18) mit einem ersten Gewinde (19), die auf den Abschnitt (16) des zweiten Trägermittels aufgeschraubt und von diesem heruntergeschraubt werden kann, umfasst, so dass die Hülse (18) verstellt werden kann, um eine Anhängerkupplung (2) zwischen der Hülse (18) und der Hülse (9) des ersten Trägermittels einzuklemmen, wobei die Aussparung (15) der zweiten Trägermittels (6) in der Hülse (18) des zweiten Trägermittels angeordnet ist.

3. Anhängerkupplungsverriegelung (1) nach einem der Ansprüche 1 und 2, wobei der Schraubenkopf (13) in der fixierten Position mit einem beliebigen aus den folgenden verschlossen wird: eine in eine Aussparung des Schraubenkopfes getriebene Anschlagkugel oder ein Schweißpunkt.

4. Anhängerkupplungsverriegelung (1) nach einem der Ansprüche 1 bis 3, wobei der Blockierabschnitt (3) dazu ausgelegt ist, eine Blockiervorrichtung (22) mit einem in die Vorrichtung integrierten Verriegelungsmechanismus, mit dem die Verriegelung der Blockiervorrichtung (22) an dem Blockierabschnitt (3) vorgenommen werden kann, aufzunehmen.

5. Anhängerkupplungsverriegelung (1) nach dem vorangegangenen Anspruch, wobei der Blockierabschnitt (3) dazu ausgelegt ist, einen Verriegelungsblock (22) als Blockiervorrichtung (22) aufzunehmen.

6. Anhängerkupplungsverriegelung (1) nach einem der Ansprüche 1 bis 3, wobei der Blockierabschnitt (3) einen Verriegelungsmechanismus umfasst, der zum Verriegeln der Blockiervorrichtung (22) an dem Blockierabschnitt (3) ausgelegt ist.

7. Anhängerkupplungsverriegelung (1) nach einem der Ansprüche 1 bis 6, wobei die Blockiervorrichtung (22) ein Teil der Anhängerkupplungsverriegelung (1) ist.

8. Anhängerkupplungsverriegelung (1) nach einem der Ansprüche 1 bis 7, wobei der Blockierabschnitt (3) zwei Befestigungspunkte (23, 24) umfasst und weiterhin zwei Stangen (20, 21) umfasst, von denen jede mit einem Ende in einem entsprechenden der Befestigungspunkte (23, 24) befestigt ist, verstellbar von diesen hervorsteht und jeweils in einem zweiten Ende (25, 26) endet, mit dem die Blockiervorrichtung (22) verbunden werden kann, um an den Stangen (20, 21) verriegelt werden zu können, wodurch der Blockierabschnitt (3) verstellt werden kann, um an unterschiedliche Lösegriffe angepasst werden zu können.

9. Anhängerkupplungsverriegelung (1) nach Anspruch 8, wobei die Stangen (20, 21) durch Gewinde mit den Befestigungspunkten (23, 24) verbunden sind, wodurch die Verstellbarkeit der Stangen in der hervorstehenen Richtung ermöglicht wird.

## Revendications

1. Verrou d'attelage de remorque (1) pour bloquer le fonctionnement d'une manette de libération d'attelage de remorque (2),
- où le verrou d'attelage de remorque comprend un moyen de fixation réglable (4) pour fixer le verrou d'attelage de remorque (1) sur des attelages de remorque de différentes tailles, et où le verrou d'attelage de remorque comprend, en outre, une partie de blocage (3) à laquelle un dispositif de blocage (22) peut être raccordé et être verrouillé, de manière à pouvoir être déverrouillé, afin de bloquer conjointement le fonctionnement de la manette de libération dans une position verrouillée,
- où le moyen de fixation (4) comprend un premier (5) et un deuxième (6) moyen de support opposés à une distance l'un de l'autre et fixés l'un à l'autre,
- où au moins le premier moyen de support (5) comprend une partie (7) dotée d'un filet de vis (8) et, en outre, un manchon (9) pourvu d'un premier filet de vis (10) qui peut être dévissé de, et vissé sur, le filet de vis (8) de la partie (7) de manière que le manchon (9) puisse être réglé pour serrer un attelage de remorque (2) entre le manchon (9) et le deuxième moyen de support (6) dans une position fixe,
- où un deuxième filet de vis (11) est situé à l'intérieur du manchon (9), le pas dudit deuxième filet de vis (11) étant différent du pas du premier filet de vis (10) du manchon (9),
- où le moyen de fixation (4) comprend, en outre, une vis de fixation (12) pourvue d'une tête de vis (13) et d'un filet de vis (14), lequel filet de vis (14) s'ajuste avec le deuxième filet de vis (11) du manchon (9),
- où le deuxième moyen de support (6) comporte un évidement (15) dans lequel la tête (13) de la vis de fixation (12) peut être complètement fraisée de manière que la tête (13) soit étroitement enfermée par le deuxième moyen de support (6),
- où la vis de fixation (12), dans la position fixe, est introduite à travers le deuxième moyen de support (6), à travers un attelage de remorque (2) fixé entre le manchon (9) et le deuxième moyen de support (6), et, en outre, est vissée avec son filet de vis (14) dans le deuxième filet de vis (11) à l'intérieur du manchon (9), et repose avec sa tête (13) dans l'évidement (15) du deuxième moyen de support (6) et contre le deuxième moyen de support (6) de manière qu'un déplacement axial de la vis de fixation (12) dans une direction vers le manchon (9) soit empêché, et où la tête (13) de la vis de fixation (12) dans la position fixe est scellée pour empêcher un dévissage de la vis de fixation (12) au moyen d'un outil de vissage,
grâce à quoi, dans la position fixe, une tentative de rotation sur le manchon (9), dans une direction qui vise à emporter le manchon (9) loin de l'attelage de remorque (2) fixe, provoque un verrouillage du manchon (9) au moyen des deux filets de vis différents (10, 11) du manchon (9) à pas différents de manière que le manchon (9) ne puisse être dévissé de l'attelage de remorque (2) dans la position fixe.

2. Verrou d'attelage de remorque (1) selon la revendication 1, dans lequel le deuxième moyen de support (6) comprend également une partie (16) dotée d'un filet de vis (17) et, en outre, un manchon (18) doté d'un filet de vis (19) qui peut être dévissé de, et vissé sur, la partie (16) du deuxième moyen de support de manière que le manchon (18) puisse être réglé pour serrer un attelage de remorque (2) entre le manchon (18) et le manchon (9) du premier moyen de support et où l'évidement (15) du deuxième moyen de support (6) est situé dans le manchon (18) du deuxième moyen de support.

3. Verrou d'attelage de remorque (1) selon l'une quelconque des revendications 1 et 2, dans lequel la tête de vis (13) dans la position fixe est scellée par un quelconque des éléments suivants : bille d'arrêt entraînée dans un évidement de tête de vis ou point de soudage.

4. Verrou d'attelage de remorque (1) selon l'une quelconque des revendications 1 à 3, dans lequel la partie de blocage (3) est apte à recevoir un dispositif de blocage (22) avec un mécanisme de verrouillage intégré dans ce dispositif avec lequel le verrouillage du dispositif de blocage (22) à la partie de blocage (3) peut avoir lieu.

5. Verrou d'attelage de remorque (1) selon la revendication précédente, dans lequel la partie de blocage (3) est apte à recevoir un bloc de verrouillage (22) en tant que dispositif de blocage (22).

6. Verrou d'attelage de remorque (1) selon l'une quelconque des revendications 1 à 3, dans lequel la partie de blocage (3) comprend un mécanisme de verrouillage apte à verrouiller le dispositif de blocage (22) à la partie de blocage (3).

7. Verrou d'attelage de remorque (1) selon l'une quelconque des revendications 1 à 6, dans lequel le dispositif de blocage (22) fait partie du verrou d'attelage de remorque (1).

8. Verrou d'attelage de remorque (1) selon l'une quelconque des revendications 1 à 7, dans lequel la partie de blocage (3) comprend deux points de fixation (23, 24) et comprend, en outre, deux barres (20, 21), fixées, chacune, avec une extrémité dans un point correspondant des points de fixation (23, 24) et font saillie de manière réglable depuis ces points et se terminent chacune en une seconde extrémité (25, 26) avec laquelle le dispositif de blocage (22) peut être raccordé pour pouvoir être verrouillé aux barres (20, 21), grâce à quoi la partie de blocage (3) peut être réglée pour être adaptée à des manettes de libération différentes.

9. Verrou d'attelage de remorque (1) selon la revendication 8, dans lequel les barres (20, 21) sont reliées par des filets de vis avec les points de fixation (23, 24), grâce à quoi la possibilité de réglage des barres dans la direction de saillie a lieu.
